# EUROPEAN PATENT APPLICATION

(11) **EP 3 246 822 A1**
(43) Date of publication of application: **22.11.2017**
(21) Application number: 17171542.8
(22) Date of filing: 17.05.2017
(51) Int. Cl.: G06F 13/40, H01R 31/00

(54) **COMPOSITE CONNECTOR HAVING DUAL TONGUE**

(30) Priority: 17.05.2016 TW 105207163 U
(71) Applicant: Wang, Pei-Lun, Keelung City 200 (TW); Song, Xiangping, Shenzhen Guangdong 518109 (CN)
(72) Inventor: WANG, Pei- Lun, 200 Keelung City (TW); LUO, Xinping, Baogai Town, Hengnan County, Hunan Province (CN); LEE, Chien-Wei, 24248 New Taipei City (TW)
(74) Representative: 2K Patentanwälte Blasberg Kewitz & Reichel

(57) **Abstract**

A composite connector is used for receiving a first and a second docking connectors (700, 800) and includes: an insulation main body (1); a first tongue (11) and a second tongue (12), and plural first, second and third terminals (3, 4, 5). The first tongue (11) and the second tongue (12) are connected to the insulation main body (1); the first terminals (3) and the second terminals (4) are disposed on two surfaces of the first tongue (11) for allowing the first docking connected (700) to be connected; the third terminals (5) are disposed on any surface of the second tongue (12) for allowing the second docking connector (800) to be connected. Accordingly, two interfaces can be integrated in the same connector, thereby achieving an objective of composite operation.

## Description

### FIELD OF THE INVENTION

The present invention relates to an electric connector, especially to a composite connector having dual tongue.

### DESCRIPTION OF RELATED ART

The connecting interface of a universal serial bus (hereinafter referred as USB) is evolved from the conventional Type-A interface to a novel Type-C interface. The feature of the Type-C interface is that there is no directivity and capable of being normally or reversely inserted, and a maximum transmission speed up to 10Gbps can be provided for satisfying the user's expectation of getting a faster transmission speed while a larger file being transmitted so as to effectively shorten the required transmission time.

However, the novel Type-C interface in not compatible with any type of conventional USB connector, if a USB Type-C connector is desired to be used, an additional space has to be reversed on a circuit board for being welded with the USB Type-C connector, thus the application thereof is still not prevail.

Moreover, the USB Type-C interface is designed for replacing the Micro USB interface which is adopted in a conventional mobile electronic device (for example a mobile phone or a tablet computer), the replacement process is delayed because the above-mentioned reasons, and external devices adopting the USB Type-C interface and the Micro USB interface cannot be used in the same electronic product (for example a computer, a mobile phone or a tablet computer), thus the above-mentioned disadvantages shall be improved.

Accordingly, the applicant of the present invention has devoted himself for improving the mentioned disadvantages.

### SUMMARY OF THE INVENTION

The present invention is to provide a composite connector, in which a first tongue corresponding to a first docking connector (a USB Type-C docking connector) and a second tongue corresponding to a second docking connector (a Micro USB docking connector) are adopted, so that two interfaces (a USB Type-C interface and a Micro USB interface) can be integrated in the same connector, thereby achieving an objective of composite operation.

Accordingly, the present invention provides a composite connector, which is used for allowing a first docking connector and a second docking connector to be inserted and includes: an insulation main body; a first tongue and a second tongue, connected to the insulation main body; a plurality of first terminals, disposed on a surface of the first tongue; a plurality of second terminals, disposed on another surface of the first tongue opposite to the above-mentioned surface, wherein the first terminals and the second terminals are served to allow the first docking connector to be connected and conducted; and a plurality of third terminals, disposed on one of two opposite surfaces of the second tongue, wherein the third terminals are served to allow the second docking connector to be connected and conducted.

In comparison with related art, the present invention has advantageous features as follows: the two interfaces (the USB Type-C interface and the Micro USB interface) can be integrated in the same connector, thereby achieving an objective of composite operation.

### BRIEF DESCRIPTION OF DRAWING

FIG. 1 is a perspective view showing a composite connector according to the present invention;
FIG. 2 is another perspective view showing the composite connector according to the present invention;
FIG. 3 is a cross sectional view showing the composite connector according to the present invention;
FIG. 4 is another cross sectional view showing the composite connector according to the present invention;
FIG. 5 is a schematic view showing the composite connector being inserted in a USB Type-C docking connector according to the present invention; and
FIG. 6 is a schematic view showing the composite connector being inserted in a Micro USB docking connector according to the present invention.

### DETAILED DESCRIPTION OF THE INVENTION

A preferred embodiment of the present invention will be described with reference to the drawings.

The present invention provides a composite connector, in which a dual tongue design is adopted for allowing a first docking connector (700) to be detachably inserted and also allowing a second docking connector (800) to be detachably inserted so as to achieve an objective of providing a composite function.

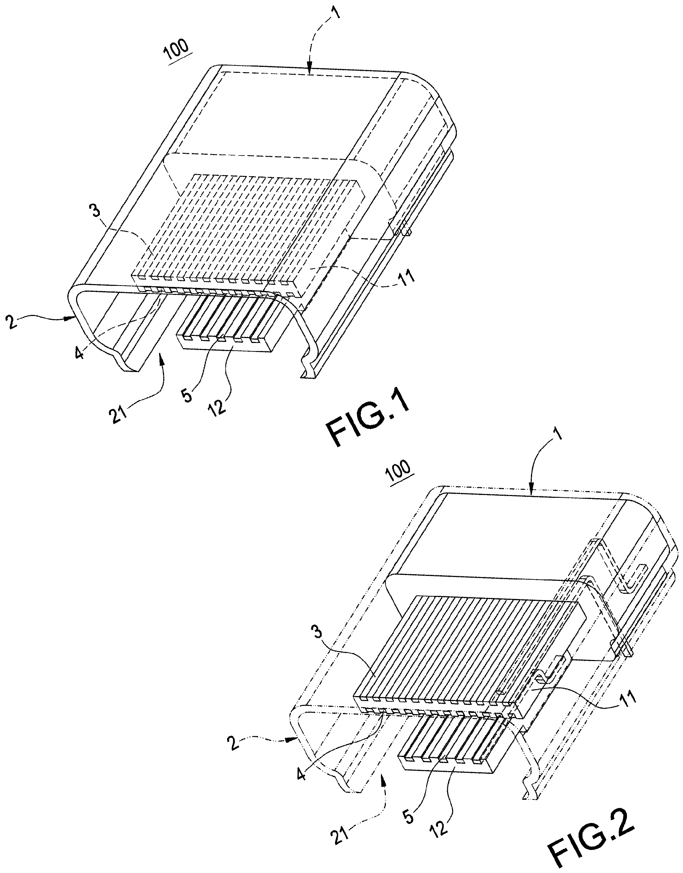

Please refer from FIG. 1 to FGI. 4, the composite connector (100) includes: an insulation main body (1), a first tongue (11), a second tongue (12), a plurality of first terminals (3), a plurality of second terminals (4) and a plurality of third terminals (5); and the composite connector (100) preferably includes a metal enclosure (2).

The first tongue (11) and the second tongue (12) are both connected to the insulation main body (1), what shall be addressed is that connecting means of the above-mentioned tongues is not limited to any certain means; according to this embodiment, a connecting means is disclosed as follows: the first tongue (11) and the second tongue (12) are connected on a same surface (for example an inner surface as shown in figures) of the insulation main body (1), and the first tongue (11) and the second tongue (12) are staggeringly arranged, spaced from each other with an interval and protruded towards a same direction (for example a direction defined to be away from the inner surface as shown in figures).

The first terminals (3) are disposed on a surface (for example a top surface as shown in figures) of the first tongue (11). The second terminals (4) are disposed on another surface (for example a bottom surface as shown in figures) of the first tongue (11) opposite to the above-mentioned surface. The third terminals (5) are disposed on one of two opposite surfaces (for example a top surface as shown in figures) of the second tongue (12).

Wherein, what shall be addressed is that fastening means of the first, the second and the third terminals (3, 4, 5) is not limited to any certain fastening means; according to this embodiment, a fastening means is disclosed as follows: a portion (for example a rear portion as shown in figures) of the first terminal (3) and a portion (for example a rear portion as shown in figures) of the second terminal (4) are both positioned on the insulation main body (1), another portion (for example a front portion as shown in figures) of the first terminal (3) and another portion (for example a front portion as shown in figures) of the second terminal (4) are respectively disposed on the top surface and the bottom surface of the first tongue (11); a portion (for example a rear portion as shown in figures) of the third terminal (5) is positioned at a rear portion of the second tongue (12), another portion (for example a front portion as shown in figures) of the third terminal (5) is disposed on a top surface at a front portion of the second tongue (12). Wherein, distal ends defined at the rear portions of the first and the second and the third terminals (3, 4, 5) are all exposed for being processed with an electrical connecting operation, for example a welding operation.

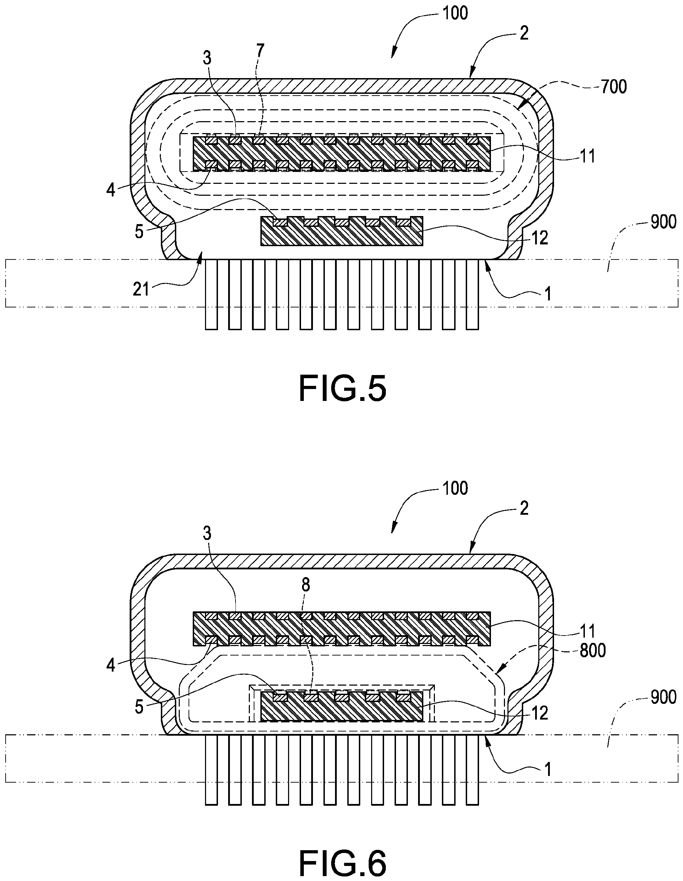

Accordingly, the first terminals (3) and the second terminals (4) allow the first docking connector (700) to be connected and conducted (as shown in FIG. 5), and the third terminals (5) allow the second docking connector (800) to be connected and conducted (as shown in FIG. 6).

It is to be noted that the first tongue (11) and the first terminals (3) and the second terminals (4) disposed on the first tongue (11) comply with the USB Type-C specification; and the second tongue (12) and the third terminals (5) disposed on the second tongue (12) comply with the Micro USB specification. As such, the quantity of the first terminals (3) and the quantity of the second terminals (4) are twelve for corresponding to the USB Type-C specification, and the first docking connector (700) is a USB Type-C docking connector; the quantity of the third terminals (5) is five for corresponding to the Micro USB specification, and the second docking connector (800) is a Micro USB docking connector.

Please refer to FIG. 5 and FIG. 6, according to the present invention, the composite connector (100) is able to utilize the first tongue (11) for allowing the first docking connector (700) (the USB Type-C docking connector as shown in FIG. 5) to be inserted, and to utilize the second tongue (12) for allowing the second docking connector (800) (the Micro USB docking connector as shown in FIG. 6) to be inserted. In addition, the distal ends defined at the rear portions of the first, the second and the third terminals (3, 4, 5) of the composite connector (100) are electrically connected to a circuit board (900).

Wherein, twenty four first docking terminals (7) of the first docking connector (700) are connected and conducted with the first terminals (3) and the second terminals (4), so that the first docking connector (700) is electrically connected to the composite connector (100); and five second docking terminals (8) of the second docking connector (800) are connected and conducted with the third terminals (5), so that the second docking connector (800) is electrically connected to the composite connector (100).

Accordingly, external connecting devices (for example a flash drive or a power bank) adopting the first and the second docking connectors (700, 800) can both be electrically conducted with the circuit board (900), thereby allowing mutual data or power transmission.

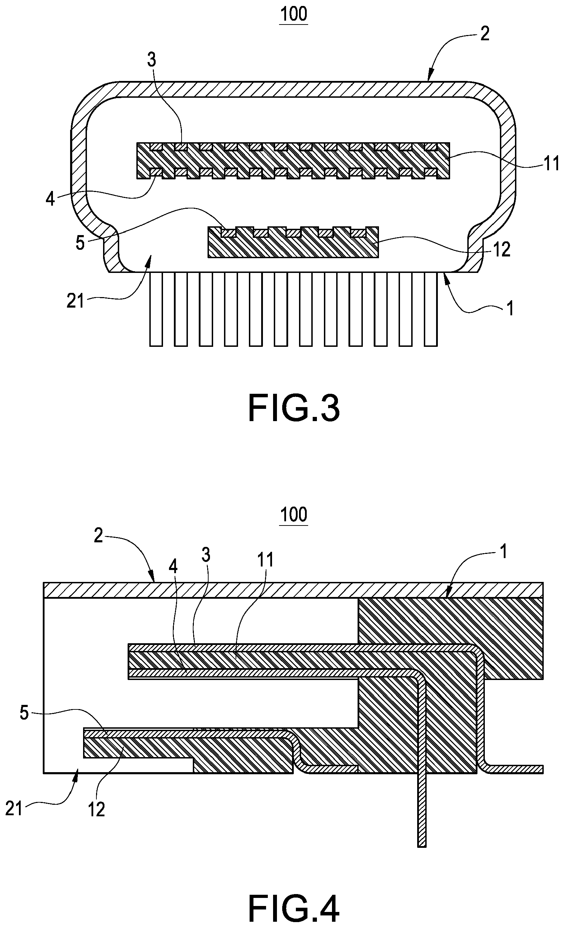

As shown from FIG. 1 to FIG. 6, the composite connector (100) provided by the present invention further includes the metal enclosure (2). The metal enclosure (2) is served to enclose the insulation main body (1), the first tongue (11) and the second tongue (12), a connection port (not provided with a code) is formed after the enclosing operation, and the first tongue (11) and the second tongue (12) are both protruded towards the connection port. Wherein, the metal enclosure (2) is fastened on the insulation main body (1), but not in physical contact with the first tongue (11) and the second tongue (12).

Moreover, for lowering the overall height of the composite connector (100) provided by the present invention, the height of the metal enclosure (2) (having plural enclosing sheets not provided with codes) is firstly lowered, according to this embodiment, the location where the metal enclosure (2) and a top surface of the second tongue (12) being adjacently arranged is formed with a notch (21), and the notch (21) is formed through removing a bottom enclosing sheet (not provided with a code) of the plural enclosing sheets of the metal enclosure (2), so that the height of the metal enclosure (2) can be lowered, and the overall height of the composite connector (100) provided by the present invention is able to be reduced for meeting the requirements of being smaller and thinner.

Furthermore, the height of the insulation main body (1) can be lowered, according to this embodiment, the interval between the first tongue (11) and the second tongue (12) can be reduced as long as the first and the second docking connectors (700, 800) can be respectively inserted (as shown in FIG. 5 and FIG. 6), so that the height of the insulation main body (1) is correspondingly lowered and the overall height of the composite connector (100) can be further lowered.

Based on what has been disclosed above, advantages achieved by the present invention comparing to the prior art are as follows: with the first tongue (11) corresponding to the first docking connector (700) (the USB Type-C docking connector) and the second tongue (12) corresponding to the second docking connector (800) (the Micro USB docking connector), the two interfaces (the USB Type-C interface and the Micro USB interface) can be integrated in the same connector, thereby achieving an objective of composite operation.

Moreover, other advantages are provided by the present invention: with the notch (21) formed on the metal enclosure (2) (or the interval between the first and the second tongues (11, 12) being further reduced), the overall height of the composite connector (100) provided by the present invention can be lowered for meeting the design requirements of being smaller and thinner.

## Claims

1. A composite connector, for receiving a first docking connector (700) and a second docking connector (800), the composite connector (100) including:
an insulation main body (1);
a first tongue (11) and a second tongue (12), connected to the insulation main body (1);
a plurality of first terminals (3), disposed on a first surface of the first tongue (11);
a plurality of second terminals (4), disposed on a second surface of the first tongue (11) opposite to the first surface, wherein the first terminals (3) and the second terminals (4) are served to allow the first docking connector (700) to be connected and conducted; and
a plurality of third terminals (5), disposed on one of two opposite surfaces of the second tongue (12), wherein the third terminals (5) are served to allow the second docking connector (800) to be connected and conducted.

2. The composite connector according to claim 1, wherein the first tongue (11) and the second tongue (12) are connected on a same surface of the insulation main body (1) and protruded towards a same direction, and the first tongue (11) and the second tongue (12) are staggeringly arranged and spaced from each other with an interval.

3. The composite connector according to claim 1 or 2, further including a metal enclosure (2), wherein the metal enclosure (2) is formed with a connection port and served to enclose the insulation main body (1), the first tongue (11) and the second tongue (12), and the first tongue (11) and the second tongue (12) are protruded towards the connection port.

4. The composite connector according to claim 3, wherein a location where the metal enclosure (2) and a surface of the second tongue (12) being adjacently arranged is formed with a notch (21).

5. The composite connector according to one of the preceding claims, wherein a portion of the first terminal (3) and a portion of the second terminal (4) are positioned on the insulation main body (1), another portion of the first terminal (3) and another portion of the second terminal (4) are disposed on the first surface and the second surface of the first tongue (11).

6. The composite connector according to one of the preceding claims, wherein a portion of the third terminal (5) is positioned at a rear portion of the second tongue (12), and another portion of the third terminal (5) is disposed on the above-mentioned surface defined at a front portion of the second tongue (12).

7. The composite connector according to one of the preceding claims, wherein the first tongue (11) and the first terminals (3) and the second terminals (4) disposed on the first tongue (11) comply with the USB Type-C specification.

8. The composite connector according to one of the preceding claims, wherein the second tongue (12) and the third terminals (5) disposed on the second tongue (12) comply with the Micro USB specification.
